# EUROPÄISCHE PATENTANMELDUNG

(11) **EP 1 026 643 A2**
(43) Veröffentlichungstag der Anmeldung: **09.08.2000**
(21) Anmeldenummer: 00102635.0
(22) Anmeldetag: 08.02.2000
(51) Int. Cl.: G07F 19/00

(54) **Verfahren und Anordnung zur Administration eines Zahlungsvorgangs über ein Telekommunikationsnetz**

(30) Priorität: 08.02.1999 DE 19905054
(71) Anmelder: SIEMENS AKTIENGESELLSCHAFT, 80333 München (DE)
(72) Erfinder: Kreppel, Jan, 82377 Penzberg (DE)

(57) **Zusammenfassung**

Ausgehend von einer Administration eines Zahlungsvorgangs über ein Telekommunikationsnetz zwischen einem Zahlungsnehmer (PEE) und einem Zahlungsgeber (PER) werden erfindungsgemäß
- eine Netzschnittstelle (S2) zwischen dem Telekommunikationsnetz (TKN) und einem Intelligenten Netz (INN) eingerichtet, in dem Zahlungskonten für den Zahlungsnehmer und den Zahlungsgeber von einer Dienstesteuerungsstelle (SCP) verwaltet werden,
- eine Kommunikationsschnittstelle (S1) zwischen dem Telekommunikationsnetz und dem Zahlungsnehmer sowie Zahlungsgeber eingerichtet, und
- über die eingerichteten Schnittstellen (S1, S2) Nachrichten übertragen, durch die der Zahlungsvorgang für die angeforderte Leistung von der Dienstesteuerungsstelle im Intelligenten Netz durchgeführt wird.

Erst die obige Kombination von Telekommunikationsnetz und Intelligentem Netz mit zentraler Verwaltung der Zahlungskonten für Zahlungsgeber und Zahlungsgeber sowie zentraler Durchführung des Zahlungsvorgangs in der Dienstesteuerungsstelle führt zu einer voll-elektronischen Abrechnung der angeforderten Leistung gegen Bezahlung

## Beschreibung

Die Erfindung betrifft ein Verfahren und eine Anordnung zur Administration eines Zahlungsvorgangs über ein Telekommunikationsnetz gemäß dem Oberbegriff des Patentanspruchs 1 bzw. des Patentanspruchs 13.

Eine Administration von Zahlungsvorgängen zwischen einem Zahlungsnehmer und einem Zahlungsgeber ist bekanntlich dann erforderlich, wenn der Zahlungsgeber eine Leistung von dem Zahlungsnehmer, der beispielsweise der Anbieter einer Sach- oder Dienstleistung ist, gegen eine Gebühr anfordert. Geldbewegungen zwischen den Konten der am Zahlungsvorgang Beteiligten verlaufen über Schnittstellen zu Banken oder Kreditinstituten, jedoch off-line und nicht vollkommen elektronisch. Diese Vorgehensweise bedarf einer kostspieligen Infrastruktur und aufwendigen Signalisierung. Darüber hinaus ist die Absicherung gegen Missbrauch des Verfahrens nicht gewährleistet und es entstehen erhebliche Verzögerungen bei der Kommunikation zwischen den Beteiligten.

Aus der deutschen Patentschrift DE 44 12 727 C2 ist ein Verfahren bekannt, bei dem eine Abrechnung der für eine Anrufverbindung anfallenden Gebühren in einem Mobilfunknetz mit Hilfe einer Vorvergebührung (prepaid service) erfolgt. Dabei empfängt ein als Einrichtung eines Intelligenten Netzes ausgebildetes Debitzentrum jeweils vorgebbare Aufladungsbeträge von einem Bankinstitut, die bei der Inanspruchnahme von Diensten für den mobilen Teilnehmer - den Zahlungsgeber - von einem Guthabenkonto abbuchbar sind.

Es ist Aufgabe der vorliegenden Erfindung, ein Verfahren und eine Anordnung anzugeben, durch das bzw. die eine vollkommen elektronische Administration des Zahlungsvorgangs zwischen Zahlungsgeber und Zahlungsnehmer über ein Telekommunikationsnetz erzielt werden kann.

Diese Aufgabe wird gemäß der Erfindung hinsichtlich des Verfahrens durch die Merkmale des Patentanspruchs 1 und hinsichtlich der Anordnung durch die Merkmale des Patentanspruchs 13 gelöst. Weiterbildungen der Erfindung sind den Unteransprüchen zu entnehmen.

Ausgehend von einer Administration eines Zahlungsvorgangs über ein Telekommunikationsnetz zwischen einem Zahlungsnehmer und einem Zahlungsgeber werden erfindungsgemäß
- eine Netzschnittstelle zwischen dein Telekommunikationsnetz und einem Intelligenten Netz eingerichtet, in dem Zahlungskonten für den Zahlungsnehmer und den Zahlungsgeber von einer Dienstesteuerungsstelle verwaltet werden,
- eine Kommunikationsschnittstelle zwischen dem Telekommunikationsnetz und dem Zahlungsnehmer sowie Zahlungsgeber eingerichtet, und
- über die eingerichteten Schnittstellen Nachrichten übertragen, durch die der Zahlungsvorgang für die angeforderte Leistung von der Dienstesteuerungsstelle im Intelligenten Netz durchgeführt wird.

Erst die obige Kombination von Telekommunikationsnetz und Intelligentem Netz mit zentraler Verwaltung der Zahlungskonten für Zahlungsgeber und Zahlungsgeber sowie zentraler Durchführung des Zahlungsvorgangs in der Dienstesteuerungsstelle führt zu einer voll-elektronischen Abrechnung der angeforderten Leistung gegen Bezahlung. Dies bedeutet einen echten online-Zahlungsvorgang ohne Einbindung von Bank- oder Kreditinstituten in den Zahlungsverkehr. Lediglich die Signalisierungsnachrichten über das Telekommunikationsnetz werden bei der Abwicklung des Zahlungsvorgangs benutzt. Die Arbeit mit vorausbezahlten Guthaben auf den Zahlungskonten in einer einzigen zentralen Einrichtung ist durch die Erfindung möglich, schränkt die Missbrauchsmöglichkeit ein und erhöht damit die Sicherheit gegen Manipulation durch Dritte. Die Abrechnung von Sach- oder Dienstleistungen wird vorteilhafterweise zwischen Zahlungsgeber und Zahlungsnehmer direkt, d.h. online, mittels der eingerichteten Zahlungskonten und der direkten Signalisierung bewirkt. Dienstleistungen unterschiedlicher Diensteanbieter -die Zahlungsnehmer darstellen - können über eine gemeinsame Rechnung verbucht werden. Insbesondere erlaubt die Erfindung eine Unterscheidung zwischen einem Diensteanbieter für den Zahlungsvorgang und einem Diensteanbieter für die zur Verfügung gestellte Sach- oder Dienstleistung.

Gemäß einer vorteilhaften Weiterbildung der Erfindung werden Nachrichten zur Authentifikation des Zahlungsgebers übertragen und der Zahlungsvorgang bei erfolgreicher Authentifikation durchgeführt. Dadurch erhält man eine individuelle, nur für den Zahlungsgeber erlaubte Abwicklung des voll-elektronischen Zahlungsvorgangs, was auch insgesamt die Sicherheit des gesamten Zahlungsverkehrs im Telekommunikationsnetz erhöht.

Als besonders günstig hat sich gemäß einer weiteren Ausgestaltung der Erfindung gezeigt, wenn gemeinsam mit dem Zahlungsvorgang ein Dienst, z.B. ein Fernwirk- oder Alarmierungsdienst, administriert wird. Auf diese Weise können über Bezahlung gesteuerte Geräte jeglicher Art - wie z.B. Schranken, Garagen, Automaten usw. - zusammen mit der voll-elektronischen Zahlungstransaktion über das Telekommunikationsnetz verknüpft werden.

Von Vorteil ist es gemäß einer anderen Weiterbildung der Erfindung, wenn vor der Authentifikation von der Dienstesteuerungsstelle zumindest das Zahlungskonto des Zahlungsgebers identifiziert und dessen Kontostand hinsichtlich der Durchführbarkeit des Zahlungsvorgangs überprüft wird. Damit kann die weitere Signalisierung - insbesondere für die Authentifikation des Zahlungsgebers - bereits vorab beeinflusst und eine Verzögerung vermieden werden, wenn beispielsweise keine ausreichende Deckung auf dem Zahlungskonto besteht.

Als günstige Weiterbildung der Erfindung hat sich auch erwiesen, wenn von der Dienstesteuerungsstelle eine Nachricht über die erfolgreiche Durchführung des Zahlungsvorgangs zum Zahlungsgeber und Zahlungsnehmer gesendet wird. Mit dem Empfang dieser Nachricht kann der Zahlungsnehmer sichergehen, dass die Verbuchung des Zahlungsvorgangs tatsächlich authentisch ist.

Von besonderem Vorteil ist gemäß einer Variante der Erfindung, dass eine Kommunikationsschnittstelle zwischen dem Telekommunikationsnetz und einem Kommunikationsendgerät des Zahlungsgebers sowie eine Kommunikationsschnittstelle zwischen dem Telekommunikationsnetz und einer Umsetzungseinrichtung für den Übergang in ein Datennetz - vorzugsweise in das Internet - , auf das der Zahlungsnehmer Zugriff hat, eingerichtet wird. Dadurch können auch die in diesem Netz angebotenen Leistungen - vor allem die Internetdienste - entsprechend der Erfindung hinsichtlich der Zahlungsvorgänge vollelektronisch behandelt werden.

Die Erfindung wird anhand in der Zeichnung dargestellter Ausführungsbeispiele näher erläutert. Im einzelnen zeigen
- FIG 1: das Blockschaltbild einer ersten Variante einer Anordnung zur Administration eines Zahlungsvorgangs gemäß der Erfindung,
- FIG 2: das Blockschaltbild einer zweiten Variante einer Anordnung zur Administration eines Zahlungsvorgangs gemäß der Erfindung, und
- FIG 3: einen beispielhaften Nachrichtenfluß bei der Administration des Zahlungsvorgangs zwischen Zahlungsgeber und Zahlungsnehmer sowie einer Dienstesteuerungsstelle eines Intelligenten Netzes .

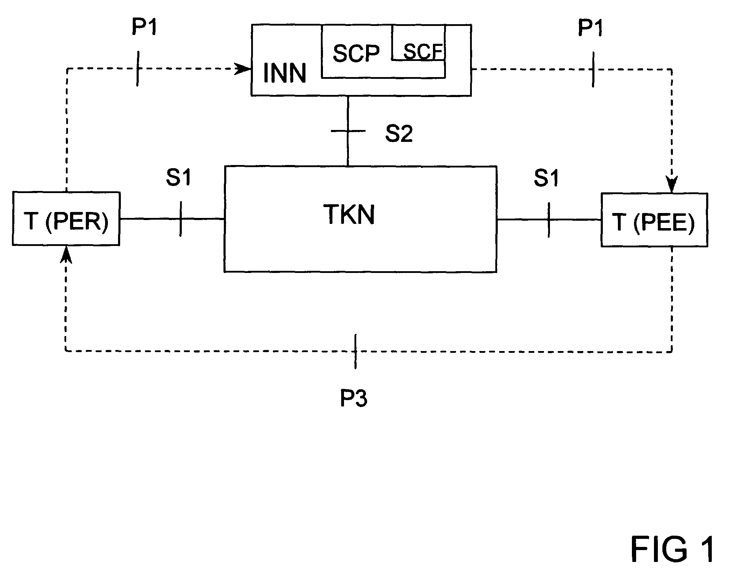

FIG 1 zeigt in einem Blockschaltbild das Zusammenwirken eines Telekommunikationsnetzes TKN - das beispielsweise aus einem Mobilfunknetz besteht - mit einem Intelligenten Netz INN sowie Kommunikationsendgeräten T eines Zahlungsgebers PER und eines Zahlungsnehmers PEE. Dabei sind Zahlungsgeber PER und Zahlungsnehmer PEE in einen Zahlungsvorgang involviert, bei dem der Zahlungsgeber PER eine Sach- oder Dienstleistung von dem Zahlungsnehmer PEE gegen ein Entgelt anfordert. Das Intelligente Netz INN weist eine Dienstesteuerungsstelle SCP (service Control Point) mit einer Kontrollfunktion SCF (Service Control Function) auf, von der an zentraler Stelle der Zahlungsvorgang für die angeforderte Leistung ohne Anbindung an Bank- oder Kreditinstitute voll-elektronisch administriert und durchgeführt wird. Dazu sind eine Netzschnittstelle S2 zwischen dem Telekommunikationsnetz TKN und dem Intelligenten Netz INN und eine Kommunikationsschnittstelle S1 zwischen dem Telekommunikationsnetz TKN und dem Zahlungsnebmer PEE sowie Zahlungsgeber PER eingerichtet, über die Nachrichten zur Behandlung und Abwicklung des Zahlungsvorgangs übertragen werden. Die Nachrichten mit darin enthaltenen Informationen und Daten können zwischen dem Zahlungsnehmer PEE und dem Zahlungsgeber PER bzw. deren Endgeräten T signalisiert werden (user to user signaling), dargestellt in FIG 1 durch eine Protokollschnittstelle P3. Sie werden aber auch zwischen dem Zahlungsgeber PER bzw. dessen Endgerät T und der Dienstesteuerungsstelle SCP (user to service signaling) und/oder zwischen der Dienstesteuerungsstelle SCP und dem Zahlungsnehmer PEE (service to user signaling) signalisiert, dargestellt in FIG 1 durch jeweils eine Protokollschnittstelle P1.

Für den Fall, dass es sich bei dem Telekommunikationsnetz TKN um ein Mobilfunknetz handelt, beispielsweise nach Art eines GSM-Netzes (Global System for Mobile Communication), erfolgt die Signalisierung von/zu dem Endgerät T über die als Funkschnittstelle ausgebildete Kommunikationsschnittstelle S1 und setzt sich in einem Netzsignalisierungsprotokoll zur Kommunikation der Netzeinrichtungen fort. Die Nachrichten können an der A-Schnittstelle des GSM-Netzes beispielsweise in USSD-Kontainernachrichten (Unstructured Supplementary Services) übertragen werden. Wenn die Signalisierung der Nachrichten in das Intelligente Netz INN führt - siehe Protokollschnittstelle P1 - können ebenfalls die USSD-Kontainernachrichten als Übertragungsmedium für die Informationen und Daten benutzt werden, wobei geeignete Dienstekodes in den Nachrichten jeweils einen Trigger für eine Verzweigung vom Telekommunikationsnetz TKN in das Intelligente Netz INN bilden und eine Umsetzung auf die Informationselemente des dortigen Signalisierungsprotokolls, beispielsweise dem INAP (Intelligent Network Application Part), bewirken.

Die Abrechnung gemäß dem Zahlungsvorgang in der Dienstesteuerungsstelle SCP erfolgt direkt - 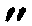 online" - über Zahlungskonten, die von der Dienstesteuerungsstelle SCP verwaltet werden. Dabei können für den Zahlungsgeber PER und den Zahlungsnehmer PEE eigene individuelle Konten oder ein gemeinsames Dienstekonto eines Diensteanbieters (electronic cash provider) in Anspruch genommen werden. Im zuletzt genannten Fall besteht das Dienstekonto vorzugsweise aus einer Anzahl von Buchungsdatensätzen, mit denen die einzelnen Gutschriften und Belastungen dokumentiert sind. Die Dienstleistungen unterschiedlicher Diensteanbieter können über eine gemeinsame Rechnung gebucht werden. Insbesondere lassen sich Diensteanbieter für den Zahlungsverkehr von Diensteanbietern der Sach-oder Dienstleistung unterscheiden. Zur Administration und Durchführung des Zahlungsvorgangs genügen allein die Signalisierungnachrichten des Telekommunikationsnetzes TKN über eingerichteten Schnittstellen, ohne dass Verbindungen über entsprechende Schnittstellen zu Bank- oder Kreditinstituten 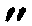 off-line" erforderlich sind. Vorzugsweise wird mit vorausbezahltem Guthaben gearbeitet, sodass der Zahlungsgeber PER mit Hilfe des Endgeräts T sein Zahlungskonto mit einem Guthabenbetrag - beispielsweise durch Kommunikation über die Protokollschnittstelle P1 mit der Dienstesteuerungsstelle SCP - auflädt.

FIG 1 zeigt eine Anordnung, bei der die Nachrichtenübertragung zwischen den Endgeräten T gemäß der Protokollschnittstelle P3 untereinander und/oder zwischen der Dienstesteuerungsstelle SCP und dem Endgerät T des Zahlungsnehmers PEE, der die von dem Zahlungsgeber PER angeforderte Leistung liefert, gemäß der Protokollschnittstelle P1 signalisiert wird. Für den Zahlungsverkehr benutzt der Zahlungsnehmer PEE z.B. ein ISDN-fähiges Endgerät T, mit dem er die Bezahlung der Leistung - z.B. an einer Warenhauskasse - initiiert, während der Zahlungsgeber PER als Endgerät T ein Mobiltelefon zur Einleitung des Zahlungsvorgangs für die bereitgestellte Leistung aktiviert.

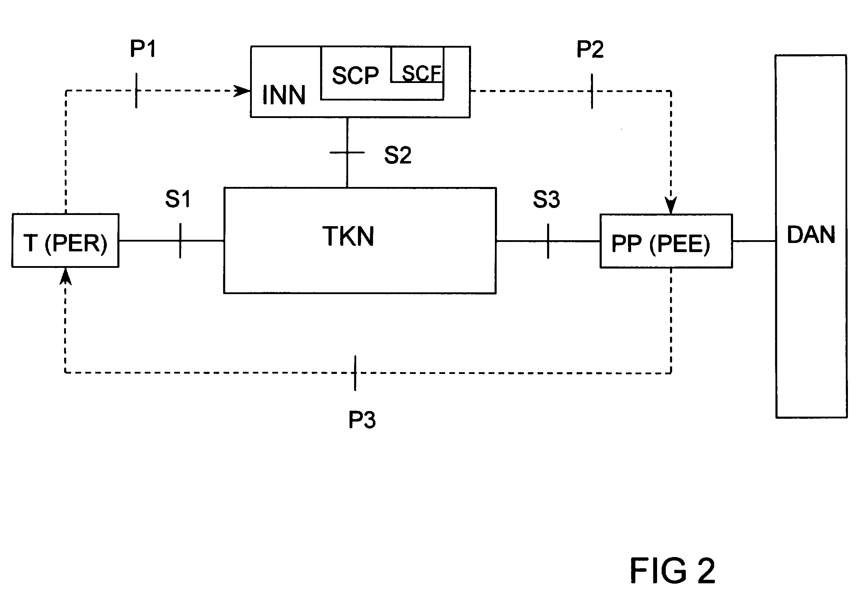

Eine alternative Variante zum Blockschaltbild von FIG 1 zeigt FIG 2, in der auf Seiten des Zahlungsnehmers PEE an Stelle des Endgeräts eine Umsetzungseinrichtung PP (Point of Presence) für den Übergang in ein Datennetz DAN, insbesondere das Internet, auf das der Zahlungsnehmer PEE Zugriff hat, angeordnet ist. Daher existieren an Stelle der Schnittstellen S2 und P1 aus FIG 1 eine andere Netzschnittstelle S3 sowie eine andere Protokollschnittstelle P2 zur Signalisierung der zwischen der Dienstesteuerungsstelle SCP und der Umsetzungseinrichtung PP verlaufenden Nachrichten über das Telekommunikationsnetz TKN. Vorzugsweise wird die Funktionalität des Zahlungsnehmers PEE, der die Leistungen anbietet - insbesondere die Internetdienste - in diese Umsetzungseinrichtung PP integriert, da dort auch die Abrechnung der Leistung erfolgt. Die Umsetzungseinrichtung vollzieht auch den Übergang von dem Datennetzprotokoll - insbesondere dem Internetprotokoll - zu dem Signalisierungsprotokoll im Telekommunikationsnetz TKN.

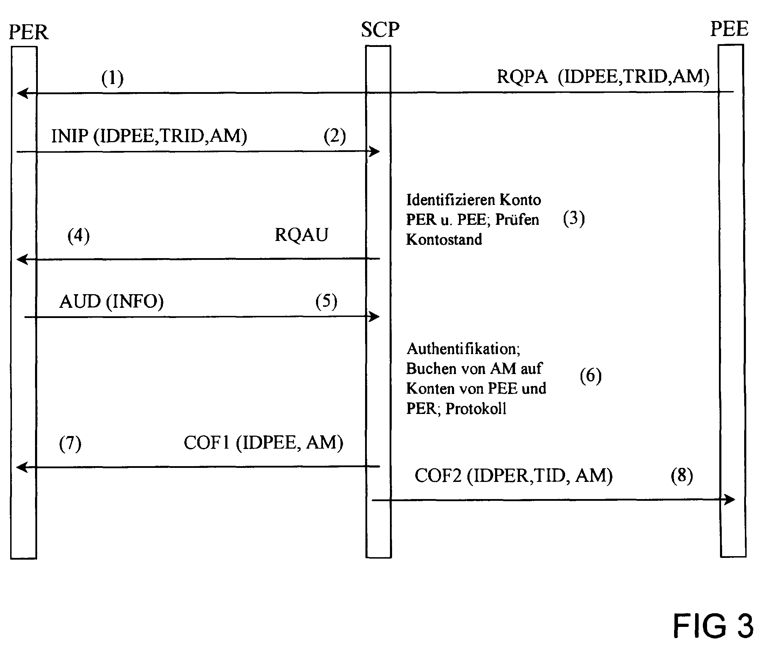

FIG 3 zeigt die Administration des Zahlungsvorgangs am Beispiel des Nachrichtenflusses zwischen dem Zahlungsgeber PER und dem Zahlungsnebmer PEE sowie der Dienstesteuerungsstelle SCP. Die dargestellten Nachrichten werden über die zuvor beschriebenen Schnittstellen abhängig von der gewählten Variante der erfindungsgemäßen Anordnung übertragen. Es sei angenommen, dass der Zahlungsgeber PER zur Lieferung der Sach- oder Dienstleistung - z.B. einer Ware über das Datennetz - über sein Endgerät auffordert. Daraufhin fordert der Zahlungsnehmer PEE, der die Leistung anbietet, zur Bezahlung auf, indem eine Nachricht RQPA (request payment) erzeugt und vom Telekommunikationsnetz transparent zum Zahlungsgeber PER weitergeleitet. In der Nachricht RQPA sind zumindest eine Kennung IDPEE zur Identifikation des Zahlungsnehmers PEE, eine Transaktionskennung TRID sowie der für die Leistung fällige Geldbetrag AM enthalten (1). Der Zahlungsgeber PER, der sich gegenüber dem Telekommunikationsnetz - z.B. mittels seiner Chipkarte in dem Mobiltelefon - authentifiziert hat, initiiert die Bezahlung über sein Endgerät, indem die Nachricht INIP (initiate payment) erzeugt und zu der Dienstesteuerungsstelle SCP sendet (2). Dabei enthält die Nachricht INIP die Kennungen IDPEE und TRID sowie den Geldbetrag AM.

Die Dienstesteuerungsstelle SCP bzw. deren Kontrollfunktion ermittelt das Zahlungskonto des Zahlungsgebers PER - vorzugsweise auch das des Zahlungsnehmers PEE - und überprüft den Kontostand im Hinblick auf die Durchführbarkeit des Zahlungsvorgangs (3). Ist dies gegeben, erzeugt und sendet die Dienstesteuerungsstelle SCP bzw. deren Kontrollfunktion eine Nachricht RQAU (request authentication data) zur Authentifikation des Zahlungsgebers PER aus (4), die vom Zahlungsgeber PER durch Übermittlung einer Nachricht AUD (authentication data) mit darin enthaltenen Authentifikationsinformationen INFO beantwortet wird (5). Nur für den Fall der erfolgreichen Authentifikation führt die Dienstesteuerungsstelle SCP bzw. deren Kontrollfunktion den Zahlungsvorgang durch, indem sie den Geldbetrag AM vom Zahlungskonto des Zahlungsgebers PER abbucht und auf das Zahlungskonto des Zahlungsnehmers PEE hinzubucht. Vorzugsweise wird der durchgeführte Zahlungsvorgang von der Dienstesteuerungsstelle SCP protokolliert (6).

Sobald die Zahlung erfolgt ist, werden der Zahlungsgeber PEE und der Zahlungsnehmer PER über die Sendung bzw. den Empfang des Geldbetrags informiert, indem die Dienstesteuerungsstelle SCP eine Nachricht COF1 (confirm payment to payer) sowie eine Nachricht COF2 (confirm payment to payee) erzeugt und zum Zahlungsgeber PER sowie zum Zahlungsnehmer PEE aussendet. Die Nachricht COF1 enthält die Kennung IDPEE des Zahlungsnehmers und den Geldbetrag AM, während die Nachricht COF2 die Kennung IDPER des Zahlungsgebers, die Transaktionskennung TRID und den Geldbetrag AM beinhaltet.

Vorzugsweise kann zusammen mit dem voll-elektronischen Zahlungsvorgang ein Dienst administriert werden, um insbesondere in Verbindung mit dem Authentifikationsprozess eine sichere Abwicklung von Fernwirk- oder Alarmierungsdiensten zu ermöglichen. Mit Hilfe der Dienstesteuerungsstelle SCP kann die Authentifizierung für eine Fernbedienungsanwendung zusammen mit einer Zahlungstransaktion verknüpft werden. Beispielhafte Dienste hierfür sind das Freischaltung eines Drehkreuzes (z.B. Messe, Museum, öffentlicher Nahverkehr), die elektronische Bezahlung einer Mautgebühr (z.B. Schranke, Autobahn/ Parkgarage), das Öffnen eines Schlosses (z.B. Fahrradverleih), 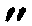 Pay per View"-Anwendungen (z.B. Temporäre Freigabe des Fernseh-Decoders). Im zuletzt genannten Fall ermittelt die Dienstesteuerungsstelle SCP den Preis abhängig von der ausgewählten Sendung. Weitere Beispiele umfassen Zahlungsvorgänge für Automaten, wie Waschautomat oder Zigarrettenautomat oder Zeitungsautomat, oder die Autowaschstraße.

Der Authentifikationsmechanismus in Verbindung mit einem Zahlungsvorgang ist im übrigen nicht nur für Fernbedienungsdienste (Mensch --> Machine), sondern auch für Alarmierungsdienste (Maschine--> Mensch) anwendbar. So z.B. kann der Automat eine LEER- Meldung an den Wartungsdienst absetzen oder ein automatischer Softwareaktualisierung ablaufen.

## Patentansprüche

1. Verfahren zur Administration eines Zahlungsvorgangs über ein Telekommunikationsnetz (TKN) zwischen einem Zahlungsnehmer (PEE) und einem Zahlungsgeber (PER), bei dem der Zahlungsgeber (PER) eine Leistung von dem Zahlungsnehmer (PEE) anfordert,
**dadurch gekennzeichnet**,
dass eine Netzschnittstelle (S2) zwischen dem Telekommunikationsnetz (TKN) und einem Intelligenten Netz (INN) eingerichtet wird, in dem Zahlungskonten für den Zahlungsnehmer (PEE) und den Zahlungsgeber (PER) von einer Dienstesteuerungsstelle (SCP) verwaltet werden,
dass eine Kommunikationsschnittstelle (S1, S3) zwischen dem Telekommunikationsnetz (TKN) und dem Zahlungsnehmer (PEE) sowie Zahlungsgeber (PER) eingerichtet wird, und dass über die eingerichteten Schnittstellen (S2, S1, S3) Nachrichten übertragen werden, durch die der Zahlungsvorgang für die angeforderte Leistung von der Dienstesteuerungsstelle (SCP) im Intelligenten Netz (INN) durchgeführt wird.

2. Verfahren nach Anspruch 1,
**dadurch gekennzeichnet**,
dass Nachrichten (RQAU, AUD) zur Authentifikation des Zahlungsgebers (PER) übertragen werden und der Zahlungsvorgang bei erfolgreicher Authentifikation durchgeführt wird.

3. Verfahren nach Anspruch 2,
**dadurch gekennzeichnet**,
dass vor der Authentifikation von der Dienstesteuerungsstelle (SCP) zumindest das Zahlungskonto des Zahlungsgebers (PER) identifiziert und dessen Kontostand hinsichtlich der Durchführbarkeit des Zahlungsvorgangs überprüft wird.

4. Verfahren nach einem der vorhergehenden Ansprüche,
**dadurch gekennzeichnet**,
dass von der Dienstesteuerungsstelle (SCP) jeweils eine Nachricht (COF1, COF2) über die erfolgreiche Durchführung des Zahlungsvorgangs zum Zahlungsgeber (PER) und Zahlungsnehmer (PEE) gesendet wird.

5. Verfahren nach einem der vorhergehenden Ansprüche,
**dadurch gekennzeichnet**,
dass die Kommunikationsschnittstelle (S1) jeweils zwischen dem Telekommunikationsnetz (TKN) und einem Kommunikationsendgerät (T) des Zahlungsgebers sowie einem Kommunikationsendgerät (T) des Zahlungsnehmers eingerichtet wird.

6. Verfahren nach einem der Ansprüche 1 bis 4,
**dadurch gekennzeichnet**,
dass eine Kommunikationsschnittstelle (S1) zwischen dem Telekommunikationsnetz (TKN) und einem Kommunikationsendgerät (T) des Zahlungsgebers sowie eine Kommunikationsschnittstelle (S3) zwischen dem Telekommunikationsnetz (TKN) und einer Umsetzungseinrichtung (PP) für den Übergang in ein weiteres Netz, auf das der Zahlungsnehmer Zugriff hat, eingerichtet wird.

7. Verfahren nach Anspruch 6,
**dadurch gekennzeichnet**,
dass durch die Umsetzungseinrichtung (PP) ein Übergang vom Telekommunikationsnetz (TKN) in ein Datennetz (DAN) verwirklicht wird.

8. Verfahren nach einem der vorhergehenden Ansprüche,
**dadurch gekennzeichnet**,
dass von der Dienstesteuerungsstelle (SCP) eigene Zahlungskonten für Zahlungsgeber (PER) und Zahlungsnehmer (PEE) benutzt werden.

9. Verfahren nach einem der Ansprüche 1 bis 7,
**dadurch gekennzeichnet**,
dass von der Dienstesteuerungsstelle (SCP) ein für die Zahlungskonten des Zahlungsgebers und Zahlungsnehmers gemeinsames Dienstekonto eines Diensteanbieters benutzt wird.

10. Verfahren nach einem der vorhergehenden Ansprüche,
**dadurch gekennzeichnet**,
dass zusammen mit dem Zahlungsvorgang ein Dienst administriert wird.

11. Verfahren nach einem der vorhergehenden Ansprüche,
**dadurch gekennzeichnet**,
dass die angeforderte Leistung aus einer Sach- oder Dienstleistung besteht.

12. Verfahren nach einem der vorhergehenden Ansprüche,
**dadurch gekennzeichnet**,
dass das Telekommunikationsnetz (TKN) zumindest eine Funkschnittstelle als Kommunikationsschnittstelle aufweist.

13. Anordnung zur elektronischen Administration eines Zahlungsvorgangs über ein Telekommunikationsnetz (TKN) zwischen einem Zahlungsnehmer (PEE) und einem Zahlungsgeber (PER), bei dem der Zahlungsgeber (PER) eine Leistung von dem Zahlungsnehmer (PEE) anfordert,
**gekennzeichnet durch**
- eine Netzschnittstelle (S2) zwischen dem Telekommunikationsnetz (TKN) und einem Intelligenten Netz (INN), das eine Dienstesteuerungsstelle (SCP) zum Verwalten von Zahlungskonten für den Zahlungsnehmer (PEE) und den Zahlungsgeber (PER) aufweist,
- eine Kommunikationsschnittstelle (S1, S3) zwischen dem Telekommunikationsnetz (TKN) und dem Zahlungsnehmer (PEE) sowie Zahlungsgeber (PER), und
- Mittel in der Dienstesteuerungsstelle (SCP) zum Senden und Empfangen von Nachrichten über die Schnittstellen (S2, S1, S3), durch die der Zahlungsvorgang für die angeforderte Leistung von der Dienstesteuerungsstelle (SCP) im Intelligenten Netz (INN) durchführbar ist.
